# EUROPEAN PATENT APPLICATION

(11) **EP 1 274 022 A2**
(43) Date of publication of application: **08.01.2003**
(21) Application number: 02254715.2
(22) Date of filing: 04.07.2002
(51) Int. Cl.: G06F 17/30

(54) **Reproducing apparatus and method of providing bookmark information thereof**

(30) Priority: 07.07.2001 KR 2001040681
(71) Applicant: SAMSUNG ELECTRONICS CO., LTD., Suwon-City, Kyungki-do (KR)
(72) Inventor: Chung, Hyun-Kwon, Gwangju-gun, Gyeonggi-do (KR); Ko, Jung-wan, Suwon-si, Gyeonggi-do (KR); Bak, Bong-gil, Gwanak-gu, Seoul (KR)
(74) Representative: Robinson, Ian Michael

(57) **Abstract**

A reproducing apparatus (1) for reproducing contents recorded on an information storage medium and a method of providing bookmark information of the reproducing apparatus are provided. The method includes storing bookmark information comprising an annotation input by a user with respect to selected contents and a locator necessary for reproducing the selected content, and sending the bookmark information to another reproducing apparatus (1) through the Internet. Accordingly, a user can bookmark the particular location of the predetermined content and annotate the content. In addition, the bookmark information stored in one reproducing apparatus can be sent to another reproducing apparatus through the Internet.

## Description

The present invention relates to an information storage medium, and more particularly, to a method of providing bookmark information of a reproducing apparatus, which reproduces contents recorded on an information storage medium.

With the development of information storage technology, digital versatile discs (DVDs) and DVD players (reproducing apparatuses) are being used for recording and reproducing multimedia contents, such as films and music. In addition, with the development of communication technology, transmission of multimedia contents via the Internet is being widely used.

Accordingly, in addition to the ability to simply record or reproduce multimedia contents, a user desires variety of functions. For example, a particular location (scene) is memorized during the reproduction of multimedia contents so that the multimedia contents can be immediately reproduced from the memorized location, or a particular scene is annotated so that the note can be referred to when the particular scene is reproduced the next time. Furthermore, a function for allowing memorized location information to be used in another reproducing apparatus may be desired.

It is an aim of the present invention to provide a reproducing apparatus supporting a bookmark function allowing annotation by a user and a method of providing bookmark information of the reproducing apparatus.

Another aim of the present invention is to provide a method of allowing a bookmark list of one reproducing apparatus to be used in another reproducing apparatus, and a reproducing apparatus therefore.

According to a first aspect of the present invention there is provided a method of providing bookmark information of a reproducing apparatus, which reproduces content recorded on an information storage medium. The method includes storing bookmark information comprising an annotation input by a user with respect to selected contents and a locator necessary for reproducing the selected content, and sending the bookmark information to another reproducing apparatus through the Internet. The reproducing apparatus can display the bookmark information.

According to a second aspect of the present invention there is provided a method of providing bookmark information of a reproducing apparatus, which reproduces content recorded on an information storage medium. The method includes receiving bookmark information comprising an annotation input by a user with respect to selected contents and a locator necessary for reproducing the selected content from another reproducing apparatus through the Internet, storing the bookmark information, and displaying the stored bookmark information.

Preferably, the storing of the bookmark information includes reading the locator from navigation information recorded on the information storage medium, and generating the bookmark information by combining the read locator and the annotation. Furthermore, it is preferable that the storing of the bookmark information includes storing the bookmark information in the information storage medium when the information storage medium on which the content is recorded is a recordable medium and storing the bookmark information in a recordable non-volatile memory when the information storage medium on which the content is recorded is read only medium.

More preferably, the storing of the bookmark information further includes the steps of (a1) storing a recording type of content, and (a2) storing a title name of the content.

Preferably, the step (a1) includes decoding the recording type of the content from the recording medium, on which the content is recorded, and storing the recording type, and the step (a2) includes decoding the title name of the content from the recording medium, on which the content is recorded, and storing the title name.

Preferably, the sending of the bookmark information comprises sending and receiving the bookmark information by electronic mail. Preferably, the sending of the bookmark information by electronic mail includes converting the bookmark information into a data format, which can be transferred by electronic mail; and attaching the converted bookmark information to the electronic mail and sending the electronic mail.

According to a third aspect of the present invention there is provided a reproducing apparatus including a reader section for reading predetermined data from an information storage medium; a playback section for reproducing contents provided from the reader section; a controller section for storing bookmark information comprising a locator necessary for reproducing content starting from a location selected by a user while the playback section is reproducing the content and an annotation with respect to the content; and an Internet access section for sending the bookmark information to another reproducing apparatus through the Internet under the control of the controller section.

According to a fourth aspect of the present invention there is provided a reproducing apparatus including a reader section for reading predetermined data from an information storage medium; a playback section for reproducing contents provided from the reader section; an Internet access section for receiving bookmark information comprising a locator necessary for reproducing content starting from a selected location and an annotation with respect to the content from another reproducing apparatus through the Internet; and a controller section for storing the bookmark information received through the Internet access section or displaying the stored bookmark information.

The controller section stores the bookmark information at a section of an area in which navigation information is stored on the information storage medium, when the information storage medium is a recordable medium, or store the bookmark information in a recordable non-volatile memory. In addition, the controller section attaches the bookmark information to electronic mail and sends the electronic mail to another reproducing apparatus through the Internet access section. Here, it is preferable to convert the bookmark information into a data format, which can be transferred by electronic mail, attach the converted bookmark information to the electronic mail, and send the electronic mail. For this, it is preferable that the controller section includes a non-volatile memory, in which an electronic mail program code is stored, and a processor, which operates as an electronic mail client by executing the electronic mail program code. Furthermore, the controller section receives predetermined content from an Internet server and displays it. For this, the controller section includes a non-volatile memory, in which a browser program code is stored, and a processor, which operates as a browser by executing the browser program code.

For a better understanding of the invention, and to show how embodiments of the same may be carried into effect, reference will now be made, by way of example, to the accompanying diagrammatic drawings in which:
Figure 1 is a schematic diagram of a preferred embodiment of the present invention;
Figure 2 is a block diagram of a reproducing apparatus shown in Figure 1;
Figure 3 is a detailed block diagram of the reproducing apparatus shown in Figure 2;
Figure 4 illustrates the data structure of bookmark information;
Figure 5 is a schematic diagram showing an example of a screen displaying bookmark data;
Figure 6 is a schematic diagram showing an example of an input screen on which bookmark data is input;
Figure 7 is a schematic diagram showing another example of an input screen on which bookmark data is input;
Figure 8 shows an example of a send screen through which bookmark data is sent from one reproducing apparatus to another;
Figure 9 shows an example of a bookmark table storing bookmark information;
Figure 10 is a flowchart of a procedure of storing bookmark information;
Figure 11 is a flowchart of a procedure of sending bookmark information;
Figure 12 is a flowchart of a procedure of storing received bookmark information; and
Figure 13 is a flowchart of a procedure of displaying stored bookmark information.

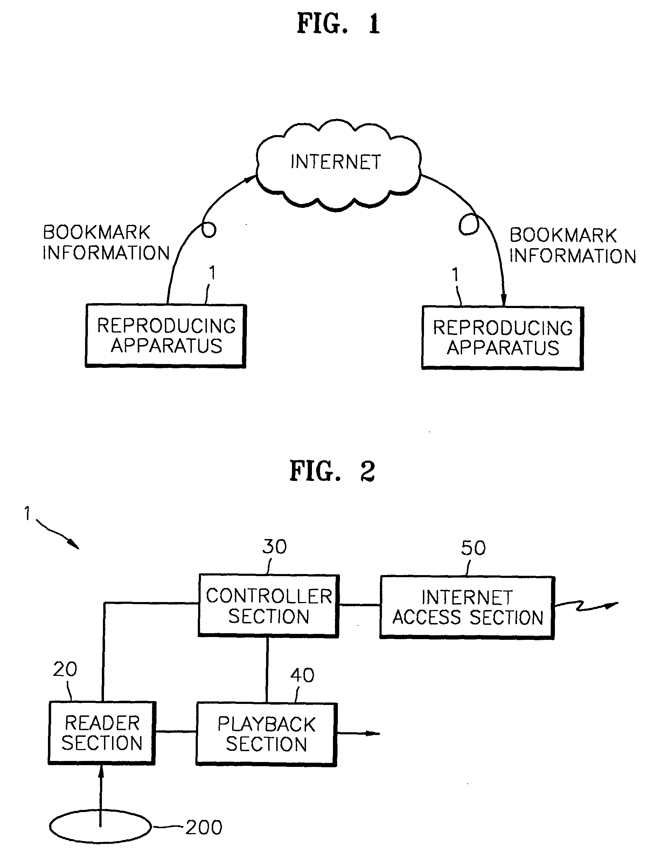

Referring to Figure 1, a plurality of reproducing apparatuses 1 according to an embodiment of the present invention are connected to the Internet. One reproducing apparatus 1 can send or receive bookmark information to or from the other reproducing apparatus 1. In one preferred embodiment, each of the reproducing apparatuses 1 is manifested as a digital versatile disc (DVD) reproducing apparatus. Included in the scope of DVDs are DVD-Video, DVD-Audio DVD-Interactive, DVD video-recording, and HD-DVD, amongst others. Since audio/video (AV) data and web documents are recorded on a DVD-Interactive, the DVD-Interactive can support an interactive mode in which the AV data can be reproduced through a display window defined by the web documents. This will be described later in detail. An HD-DVD is a DVD having high picture quality, which results from a recording density four or five times higher than an existing DVD. The adoption of a standard for the data structure of an HD-DVD is now under way. However, the present invention can be applied to any HD-DVD regardless of the standard of a data structure.

Figure 2 is a block diagram of each of the reproducing apparatuses 1 shown in Figure 1. Referring to Figure 2, the reproducing apparatus 1 includes a reader section 20, a controller section 30, a playback section 40, and an Internet access section 50. The reader section 20 reads predetermined data from an optical disc 200. The playback section 40 reproduces contents read from the optical disc 200 by the reader section 20. In the present invention, the term "contents" indicates various kinds of content recorded on an information storage medium. Accordingly, contents include AV data as well as text data. When the optical disc 200 is a DVD-Video, movies recorded thereon are the content. When the optical disc 200 is a DVD-ROM, electronic books (e-books) recorded thereon are the content. Accordingly, the playback section 40 includes a decoder for decoding AV data content recorded by way of predetermined coding. While the playback section 40 is reproducing AV data, the controller section 30 stores bookmark information about frames bookmarked by a user, and optionally displays the stored bookmark information if necessary. The controller section 30 sends or receives bookmark information to or from another reproducing apparatus through the Internet access section 50. When the optical disc 200 is a recordable medium, the controller section 30 records bookmark information on the optical disc 200. When bookmark information is recorded on the optical disc 200 in the embodiment of the present invention, it is stored in a section of an area in which navigation information about the AV data is recorded. The Internet access section 50 accesses the Internet to send bookmark information to another reproducing apparatus.

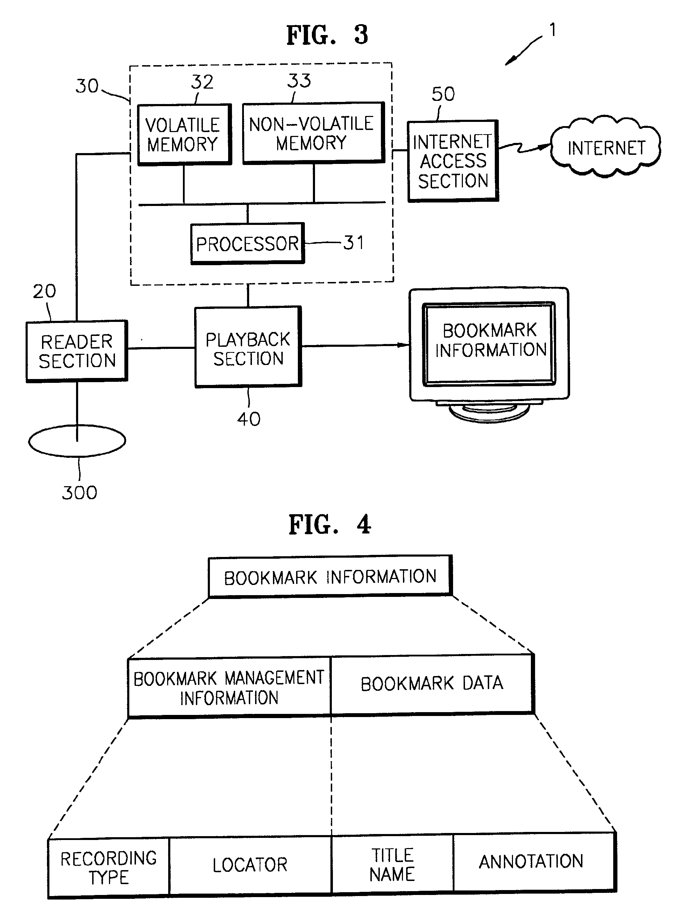

Figure 3 is a detailed block diagram of the reproducing apparatus 1 shown in Figure 2. Referring to Figure 3, the controller section 30 includes a processor 31, a volatile memory 32, and a non-volatile memory 33. The non-volatile memory 33 stores an e-mail program code and a browser program code. The processor 31 operates as an e-mail client or browser by executing the e-mail program code or the browser program code stored in the non-volatile memory 33. The processor 31 operating as an e-mail client converts bookmark information into an e-mail transmittable data format and sends e-mail, to which the converted bookmark information is attached, to an e-mail server. In addition, the processor 31 receives e-mail having bookmark information as an attachment from an e-mail server, extracts the bookmark information from the received e-mail, and stores it in the non-volatile memory 33. The processor 31 operating as a browser can browse the Internet. In other words, the processor 31 can receive a variety of contents from a predetermined Internet server and display them. In addition, when a presentation engine program code for interpreting and displaying, for example, Java or Java script, is stored in the non-volatile memory 33, the processor 31 operates as a presentation engine and supports an interactive mode of a DVD-Interactive.

A DVD-Interactive is obtained by recording information for supporting an interactive function on a conventional DVD-Video. Accordingly, AV data recorded on a DVD-Interactive is reproduced in the form of an AV data stream and can be displayed in two different modes. One is a video mode, in which the AV data is displayed in the same manner as that recorded on a usual DVD-Video. The other is an Interactive mode, in which the AV data is displayed through a display window defined by a web document. If a user selects an interactive mode, a browser installed in a DVD reproducing apparatus displays a web document recorded on a DVD-Interactive. AV data selected by the user is reproduced and displayed on the display window of the web document. For example, when the AV data is a movie, the movie is shown on the display window, and various kinds of supplementary information, such as a film script, an introduction and pictures of actors and actresses, is displayed on a screen other than the display window.

Figure 4 illustrates a preferred data structure of the bookmark information. Referring to Figure 4, bookmark information includes a bookmark management information and bookmark data. The bookmark data includes the title name of the bookmarked content and an annotation. Annotations are text data recorded by a user. For example, a user can mark and annotate a particular location (frame) while watching AV data (a particular program) recorded on an optical disc 300 of Figure 3. In other words, the title name of a bookmarked content and an annotation recorded by a user are stored as bookmark data. The bookmark management information is navigation information, which is necessary to search a program for a bookmarked location (a frame in the case of AV data), reproduce the program, and display a relevant annotation. The bookmark management information includes a recording type and a locator.

The recording type indicates the kind of bookmark belonging to the content. For example, content may be AV data recorded on a DVD-Video, DVD-Audio, DVD Video Recording, DVD-ROM, DVD-RAM, or DVD-Interactive or may be an e-book realized as a multimedia file. In this case, the recording type may be set to 0 to indicate AV data recorded by the DVD-Video standard, 1 to indicate AV data recorded by the general DVD-ROM standard, 2 to indicate AV data recorded by the DVD-Audio standard, and 3 to indicate an e-book published by a certain company, e.g., an ABC company. Bookmark information is recorded in a predetermined position according to the recording type. For example, when the recording type is DVD Video Recording, bookmark information may be recorded in a position of Movie_Cell_Entry Point Information (M_C_EPI) in navigation information.

The locator is information necessary for reproducing relevant content starting with the bookmarked location. The locator indicates the location of the bookmarked content and information necessary for reproduction. For example, when relevant content is stored in an Internet server, the locator is represented by a universal resource locator (URL). A URL is a data format for coherently expressing the addresses of accessible resources. When content is recorded on a DVD, the locator is extracted from the navigation information of the DVD. More specifically, when content is recorded on a DVD-Video, the locator includes a program number, a cell number, a navigation pack address (NV_PCK address), a program chain playback control status (PGC playback control status), a video title set number (VTSN), a title number, video title set title number (VTS_TTN), a title program chain number (TT_PGCN), a part-of-title number (PTTN), a highlight button number (HL_BTNN), and a disc's unique ID. When content is recorded on a DVD Video Recording, the locator includes a program number, a cell number, and an entry point (EP). When content is recorded on a DVD-Interactive, the locator may include a Java script variable status and the URL of a web document displayed on a screen. When content is recorded on a DVD-Audio, the locator includes an audio title set number (ATSN), a program number (PGN), an audio title group number (ATGN), an audio title number (an ATGN for a title group domain (TT_GR_DOM)), and a track number (a track number for the TT_GR_DOM). When content is a web document, the locator includes the URL of the web document. As described above, the locator includes different recording types of information according to the kind of content.

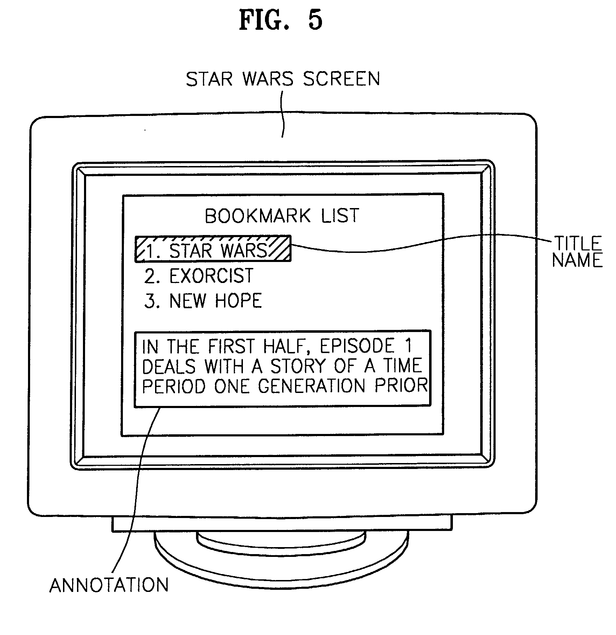

Figure 5 is a schematic diagram showing an example of a screen displaying bookmark data according to the present invention. Referring to Figure 5, the title names of bookmarked content are displayed on a screen of a display device provided in or connected to a reproducing apparatus according to the present invention. In addition, an annotation about a selected title name is displayed below the list of title names.

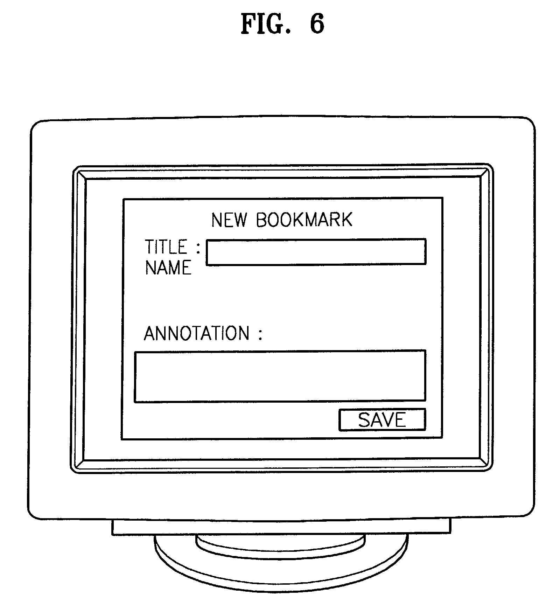

Figure 6 is a schematic diagram showing an example of an input screen, on which bookmark data is input according to the present invention. Referring to Figure 6, an input window for inputting the title name of the content and an input window for inputting an annotation are displayed on an input screen for inputting bookmark data. A user inputs the title name of the content to be bookmarked and an annotation in the respective input windows. If the user clicks the save button after inputting the title name and annotation, bookmark data (the title name and annotation) is stored. An image reproduced from AV data or content (such as a web document) provided from an Internet server is displayed on the background of the input screen.

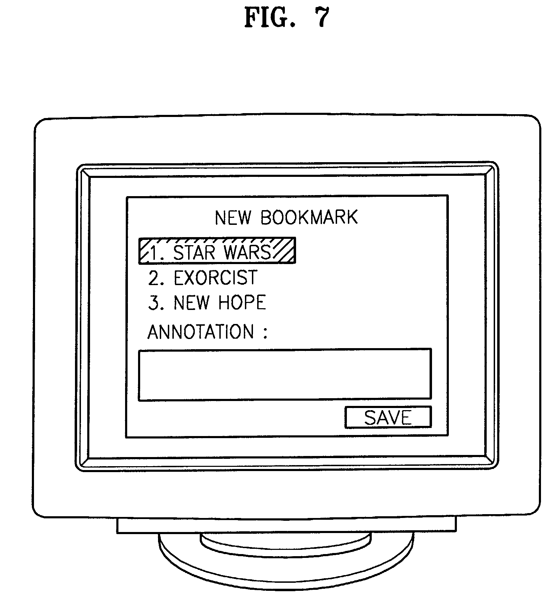

Figure 7 is a schematic diagram showing another example of an input screen, on which bookmark data is input according to the present invention. Referring to Figure 7, an annotation can be input through an input window provided below the title names of the contents previously bookmarked. On this input screen, a user selects one of the title names of the bookmarked contents and inputs an annotation about the selected content. If the user clicks the save button after inputting the annotation, the annotation is stored as bookmark data. Similarly to Figure 6, an image reproduced from AV data or content (such as a web document) provided from an Internet server is displayed on the background of the input screen.

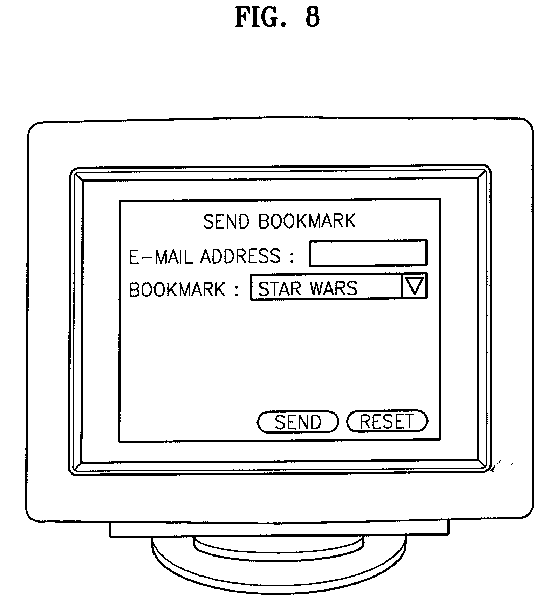

Figure 8 shows an example of a send screen, through which bookmark data is sent from one reproducing apparatus to another reproducing apparatus according to the present invention. Referring to Figure 8, the send screen is provided with an input window for inputting an e-mail address and a selection window for selecting bookmark information. If a user inputs an e-mail address, selects bookmark information, and clicks the send button, the bookmark information is sent to another reproducing apparatus.

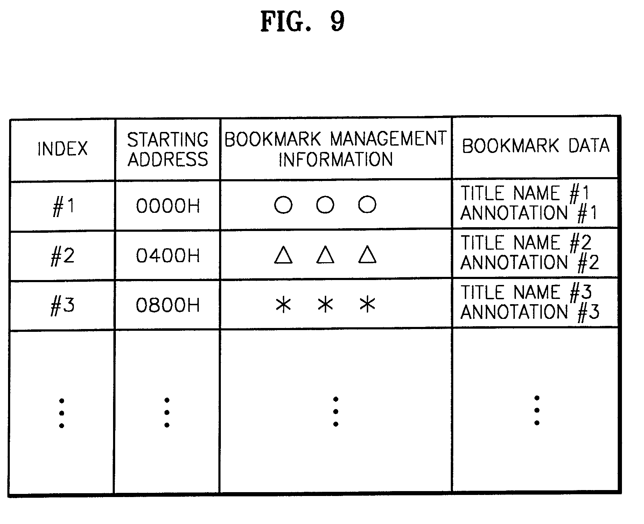

Figure 9 shows an example of a bookmark table storing bookmark information according to the present invention. Referring to Figure 9, the fields of the bookmark table are composed of an index, a starting address, a bookmark management information, and bookmark data. The starting address indicates the beginning location of the bookmark information in the non-volatile memory 33. As described above, the bookmark management information contains information necessary for navigating bookmark data, and the bookmark data contains the title name of the bookmarked content and the annotation.

A preferred method of providing bookmark information according to the present invention will now be described based on the above configuration.

The method of providing bookmark information includes at least one of the following procedures of sending bookmark information from one reproducing apparatus to another reproducing apparatus, storing received bookmark information, and reproducing the stored bookmark information.

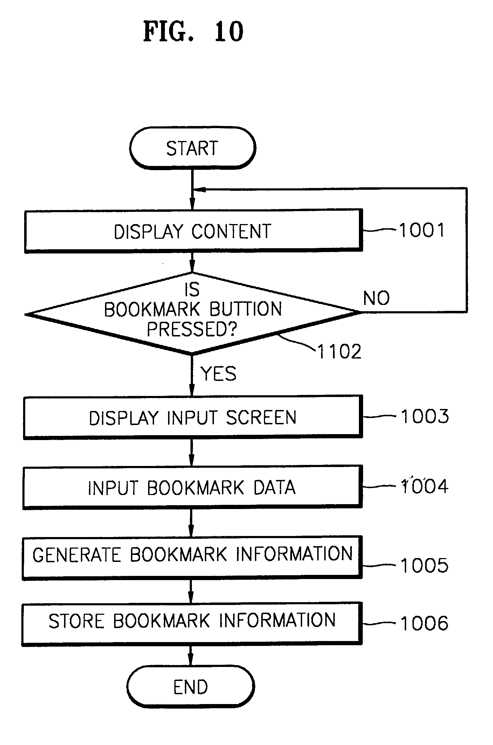

Figure 10 is a flowchart of a procedure of storing bookmark information. Referring to Figure 10, while the reproducing apparatus 1 is displaying content (AV data recorded on the optical disc 300 or a web document received through an Internet server) in step 1001, if a user presses a bookmark button (not shown) provided on the reproducing apparatus 1 in order to bookmark a predetermined location of the content in step 1002, the controller 30 displays an input screen for allowing the user to input bookmark data in step 1003. The user inputs the title name of the content and an annotation on the input screen, and the controller section 30 receives the input bookmark data in step 1004. The controller section 30 extracts relevant information from, for example, navigation information, a web document, or header information of a multimedia file recorded on the optical disc 300, to generate a bookmark management information and generates bookmark information by combining the bookmark management information with the bookmark data in step 1005. Next, the controller section 30 stores the generated bookmark information in step 1006. More specifically, when it is determined that the optical disc 300 is a DVD-Video based on the recording type of content, the controller section 30 stores the bookmark information according to a data structure defined for a DVD-Video. When it is determined that the optical disc 300 is a DVD-Interactive, the controller section 30 stores the bookmark information according to a data structure defined for a DVD-Interactive. When it is determined that the content is a web document, the controller section 30 stores the bookmark data in the form of a URL.

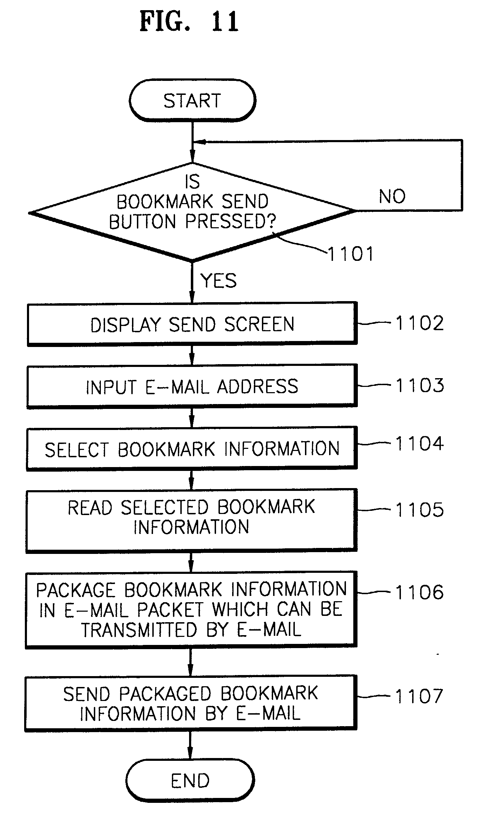

Figure 11 is a flowchart of a procedure of sending bookmark information. Referring to Figure 11, if a user presses a bookmark send button (not shown) in step 1101, the controller section 30 displays a send screen for sending bookmark information in step 1102. If the user inputs an e-mail address in step 1103 and selects bookmark information in step 1104 on the send screen, the controller section 30 reads the selected bookmark information from the non-volatile memory 33 or the optical disc 300 in step 1105. Next, the controller section 30 packages the read bookmark information in a data format allowing e-mail transmission, i.e., an e-mail packet, in step 1106. A representative data format allowing e-mail transmission is Multi-purpose Internet Mail Extensions (MIME). MIME is extended from a Simple Mail Transfer Protocol (SMTP) that can process ASCII data only so as to allow transfer of audio data, video data, images, application programs, and other various data files. Internet servers embed an MIME header in data for transmission, and clients select an application program for reproduction referring to a data format recorded in the header. Application programs frequently used are basically installed in a browser.

The controller section 30 sends the packaged bookmark information to the e-mail address input in step 1103 via e-mail in step 1107.

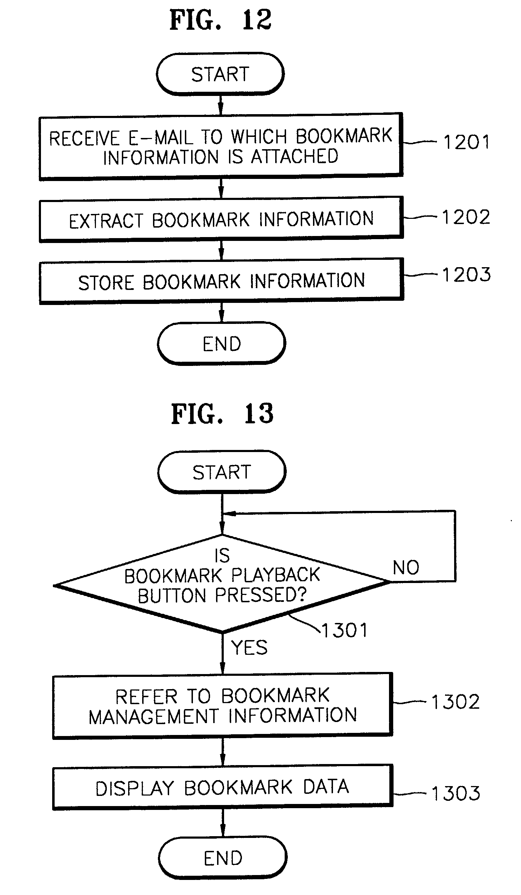

Figure 12 is a flowchart of a procedure of storing received bookmark information. Referring to Figure 12, the controller section 30 receives e-mail to which bookmark information is attached in step 1201, extracts the bookmark information from the received e-mail in step 1202, and stores the bookmark information in the non-volatile memory 33 or the optical disc 300 in step 1203.

Figure 13 is a flowchart of a procedure of displaying stored bookmark information. Referring to Figure 13, when the reproducing apparatus 1 reproduces the content, if a user presses a bookmark playback button (not shown) in step 1301, the controller section 30 refers to a bookmark management information contained in the bookmark information in step 1302 to display bookmark data in step 1303. More specifically, after referring to a recording type as bookmark information, the controller section 30 and the playback section 40 decode bookmark data according to a data structure defined for a DVD-Video to reproduce it, when it is determined that the optical disc 300 is a DVD-Video. After referring to the recording type as bookmark information, the controller section 30 and the playback section 40 decode bookmark information according to a data structure defined for a DVD-Interactive to reproduce it, when it is determined that the optical disc 300 is a DVD-Interactive. The controller section 30 and the playback section 40 display bookmark data in the form of a URL when it is determined that the content is a web document.

As described above, the present invention allows a user to bookmark a particular location in predetermined content and annotate the content. In addition, bookmark information stored in one reproducing apparatus can be sent to another reproducing apparatus through the Internet. Moreover, one reproducing apparatus can receive bookmark information from another reproducing apparatus and display it.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing bookmark information of a reproducing apparatus (1) , which reproduces content recorded on an information storage medium (200), the method comprising:
storing bookmark information comprising an annotation input by a user with respect to selected contents and a locator for reproducing the selected content; and
sending the bookmark information to another reproducing apparatus through the Internet.

2. The method of claim 1, further comprising displaying the bookmark information.

3. The method of claim 1 or 2, wherein the storing of the bookmark information comprises:
reading the locator from navigation information recorded on the information storage medium; and
generating the bookmark information by combining the read locator and the annotation.

4. The method of claim 1, 2 or 3 wherein the storing of the bookmark information comprises storing the bookmark information in the information storage medium when the information storage medium on which the content is recorded is in a recordable state and storing the bookmark information in a recordable non-volatile memory when the optical recording medium on which the content is recorded is not in a recordable state.

5. The method of any preceding claim, wherein the storing of the bookmark information further comprises the steps of:
(a1) storing a recording type of content; and
(a2) storing a title name of the content.

6. The method of claim 5, wherein the step (a1) comprises reading the recording type of the content from the information storage medium, on which the content is recorded, and storing the recording type.

7. The method of claim 5 or 6, wherein the step (a2) comprises reading the title name of the content from the information storage medium, on which the content is recorded, and storing the title name.

8. The method of any preceding claim, wherein the sending of the bookmark information comprises sending and receiving the bookmark information by electronic mail.

9. The method of claim 8, wherein the sending of the bookmark information by electronic mail comprises:
converting the bookmark information into a format, which can be transferred by electronic mail; and
attaching the converted bookmark information to the electronic mail and sending the electronic mail.

10. A method of providing bookmark information of a reproducing apparatus (1), which reproduces content recorded on an information storage medium (200), the method comprising:
receiving bookmark information comprising an annotation input by a user with respect to selected contents and a locator for reproducing the selected content from another reproducing apparatus through the Internet; and
storing the bookmark information.

11. The method of claim 10, wherein the storing of the bookmark information further comprises the steps of:
(a1) storing a recording type of content; and
(a2) storing a title name of the content.

12. The method of claim 11, wherein the step (a1) comprises reading the recording type of the content from the information storage medium, on which the content is recorded, and storing the recording type.

13. The method of claim 11 or 12, wherein the step (a2) comprises reading the title name of the content from the information storage medium, on which the content is recorded, and storing the title name.

14. The method of any of claims 10 to 13, wherein the sending of the bookmark information comprises sending and receiving the bookmark information by electronic mail.

15. The method of claim 14, wherein the sending of the bookmark information by electronic mail comprises:
converting the bookmark information into a format, which can be transferred by electronic mail; and
attaching the converted bookmark information to the electronic mail and sending the electronic mail.

16. A reproducing apparatus comprising:
a reader section (20) for reading predetermined data from an information storage medium (200);
a playback section (40) for reproducing contents provided from the reader section (20);
a controller section (30) for storing bookmark information comprising a locator for reproducing content starting from a location selected by a user while the content is being reproduced by the playback section (40) and an annotation with respect to the content; and
an Internet access section (50) for sending the bookmark information to another reproducing apparatus (1) through the Internet under the control of the controller section (30).

17. The reproducing apparatus of claim 16, wherein the controller section (30) stores the bookmark information in the information storage medium when the information storage medium is in a recordable state.

18. The reproducing apparatus of claim 16 or 17, wherein the controller section (30) stores the bookmark information at a section of an area in which navigation information is stored on the information storage medium.

19. The reproducing apparatus of claim 16, 17 or 18, wherein the controller section (30) stores the bookmark information in a recordable non-volatile memory.

20. The reproducing apparatus of any of claims 16 to 19, wherein the controller section (30) attaches the bookmark information to electronic mail and sends the electronic mail to another reproducing apparatus (1) through the Internet access section.

21. The reproducing apparatus of claim 20, wherein the controller section (30) converts the bookmark information into a format, which can be transferred by electronic mail, attaches the converted bookmark information to the electronic mail, and sends the electronic mail.

22. The reproducing apparatus of claim 21, wherein the controller section (30) comprises a non-volatile memory (33), in which an electronic mail program code is stored, and a processor (31), which operates as an electronic mail client by executing the electronic mail program code.

23. The reproducing apparatus of any of claims 16 to 22, wherein the controller section (30) receives predetermined content from an Internet server and displays it.

24. The reproducing apparatus of claim 23, wherein the controller section (30) comprises a non-volatile memory (33), in which a browser program code is stored, and a processor (31), which operates as a browser by executing the browser program code.

25. The reproducing apparatus of any of claims 16 to 24, wherein the bookmark information further comprises a recording type of content and a title name of the content.

26. The reproducing apparatus of claim 25, wherein the reader section (20) reads the recording type and the title name from the information storage medium, on which the content is recorded.

27. A reproducing apparatus comprising:
a reader section (20) for reading predetermined data from an information storage medium (200) ;
a playback section (40) for reproducing contents provided from the reader section;
an Internet access section (50) for receiving bookmark information comprising a locator for reproducing content starting from a selected location and an annotation with respect to the content from another reproducing apparatus (1) through the Internet; and
a controller section (30) for storing the bookmark information received through the Internet access section or displaying the stored bookmark information.

28. The reproducing apparatus of claim 27, wherein the controller section (30) stores the bookmark information in the information storage medium when the information storage medium is in a recordable state.

29. The reproducing apparatus of claim 27 or 28, wherein the controller section (30) stores the bookmark information in a recordable non-volatile memory (33).

30. The reproducing apparatus of claim 27, 28 or 29, wherein the controller section (30) attaches the bookmark information to electronic mail and sends the electronic mail to another reproducing apparatus (1) through the Internet access unit (50).

31. The reproducing apparatus of claim 30, wherein the controller section (30) converts the bookmark information into a format, which can be transferred by electronic mail, attaches the converted bookmark information to the electronic mail, and sends the electronic mail.

32. The reproducing apparatus of claim 31, wherein the controller section comprises a non-volatile memory (33), in which an electronic mail program code is stored, and a processor (31), which operates as an electronic mail client by executing the electronic mail program code.

33. The reproducing apparatus of any of claims 27 to 32, wherein the bookmark information further comprises a recording type of content and a title name of the content.
